# EUROPÄISCHE PATENTANMELDUNG

(11) **EP 1 598 247 A2**
(43) Veröffentlichungstag der Anmeldung: **23.11.2005**
(21) Anmeldenummer: 05100683.1
(22) Anmeldetag: 01.02.2005
(51) Int. Cl.: B60S 1/08

(54) **Regensensor**

(30) Priorität: 29.03.2004 DE 102004015699
(71) Anmelder: ROBERT BOSCH GMBH, 70442 Stuttgart (DE)
(72) Erfinder: Riechert, Juergen, 48477 Hoerstel-Bevergern (DE)

(57) **Zusammenfassung**

Es wird ein Regensensor (10), insbesondere für ein Kraftfahrzeug vorgeschlagen, der mindestens einem Sender (16) und einen Empfänger (18) umfasst, der die Strahlung des Senders (16) zu empfangen vermag und ein Signal (S) in Abhängigkeit der empfangenen Strahlung abgibt. Weiterhin umfasst der Regensensor (10) einen Lichtleitkörper (20), der mit einer Grundfläche (24) durch ein Koppelmedium (26) mit einer Scheibe (12) verbindbar ist. Der Lichtleitkörper (20) leitet hierbei die Strahlung des Senders (16) in Richtung der Scheibe (12). Erfindungsgemäß weist das Koppelmedium (26) eine lichtführende Struktur (30) auf.

## Beschreibung

### Stand der Technik

Die Erfindung betrifft einen Regensensor nach Gattung des unabhängigen Anspruchs.

Es sind schon zahlreiche Regensensoren, beispielsweise aus der DE-A-199 33 641 bekannt, die zur Detektion von Feuchtigkeit und Schmutz auf der Windschutzscheibe eines Kraftfahrzeugs dienen. Diese Regensensoren umfassen im wesentlichen einen Sender, einen Empfänger sowie einen Lichtleitkörper und eine Steuereinrichtung, die eine Scheibenwischvorrichtung steuert. Wird Schmutz oder Feuchtigkeit auf der Windschutzscheibe vom Regensensor erkannt, so löst dieser einen Wischzyklus der Scheibenwischvorrichtung auf oder stellt die Scheibenwischvorrichtung in eine Betriebsstufe.

Der Lichtleitkörper weist bei derartigen Regensensoren eine Grundfläche auf, die durch ein Koppelmedium mit einer Scheibe einer Kraftfahrzeugs verbindbar ist und leitet zumindest die Strahlung des Senders in Richtung der Scheibe. Je nach Feuchtigkeit oder Verschmutzung auf der Scheibe wird die Strahlung auf der, dem Regensensor abgewandten Glas-Luft Grenzfläche der Scheibe reflektiert und durch den Lichtleitkörper in den Empfänger zurückgeleitet.

Nun ist es wünschenswert, dass die Intensität der Strahlung, die in die Scheibe geleitet wird, möglichst groß ist, bzw. dass das auf der Scheibe durch die Strahlung des Senders ausgeleuchtete Feld möglichst groß ist, um eine große Detektionsfläche und einen großen Signal-Rausch Abstand zu erhalten. Auf diese Weise kann die Empfmdlichkeit des Regensensors erhöht und damit das Ansprechverhalten einer automatischen Scheibenwischvorrichtung verbessert werden.

Weiterhin wurde im Stand der Technik vorgeschlagen, entsprechend leistungsfähige Sender zu verwenden, die jedoch kostenintensiv und in ihrer Lebensdauer beschränkt sind. Die Verwendung von empfindlicheren Empfängern macht den Regensensor anfälliger gegen störende Einflüsse durch Fremdlicht wie Sonneneinstrahlung, Scheinwerfer anderer Fahrzeuge oder Umgebungsbeleuchtung.

### Vorteile der Erfindung

Der erfindungsgemäße Regensensor mit den Merkmalen des Hauptanspruchs hat den Vorteil, dass durch lichtführende Strukturen im Koppelmedium mehr Strahlung in Richtung der Scheibe gelenkt wird, wodurch die sensitive Fläche vergrößert bzw. intensiviert wird. Darüber hinaus ist eine derartige Ausbildung kostengünstig und einfach in der Herstellung.

Durch die in den Unteransprüchen aufgeführten Maßnahmen ergeben sich vorteilhafte Weiterbildungen und Verbesserungen der im Hauptanspruch angegebenen Merkmale.

Besonders vorteilhaft ist es, wenn das Koppelmedium eine mit der Grundfläche des Lichtleitkörpers verbundene Deckfläche sowie mindestens eine Seitenfläche aufweist und die Seitenfläche schräg zur Grundfläche angeordnet ist, so dass die Seitenfläche eine lichtführende Struktur bildet. Auf diese Weise werden keine weiteren Bauelemente benötigt und es wird eine signifikante Verbesserung der Effektivität des Regensensors erzielt.

Besonders vorteilhaft ist es, wenn die Seitenfläche des Koppelmediums zumindest im Inneren reflektierend ausgebildet ist. Auf diese Weise kann eine weitere Effizienzsteigerung des Regensensors erzielt werden, ohne dass stärkere Sender benötigt werden.

Weiterhin ist es von Vorteil, wenn die Seitenfläche mit Lack versehen ist, da auf diese Weise störende Fremdlichteinflüsse verhindert werden können.

In einer vorteilhaften Ausgestaltung ist im Koppelelement ein zumindest teilweise reflektiertes Element vorgesehen, das beispielsweise als reflektierender Silikonring oder als reflektierende Folie ausgebildet ist, und so eine lichtführende Struktur bildet.

Um die Baugröße des Regensensors weiterhin klein zu halten ist es vorteilhaft, wenn die lichtführende Struktur zumindest teilweise auf einer senkrechten Linie zwischen Sender und/oder Empfänger und der Scheibe angeordnet ist. Hierdurch wird erreicht, dass Sender und/oder Empfänger an den äußersten Enden des Regensensors angeordnet werden können, so dass sich eine große sensitive Fläche bei kleinen Abmessungen des Regensensors ergibt.

In einer kostengünstigen und einfachen Ausbildung ist das Koppelelement in einem 2-oder mehrkomponentigen Spritzgussverfahren direkt an den Lichtleitkörper selbst angespritzt.

### Zeichnungen

Verschiedene Ausführungsbeispiele der Erfindung sind in den Zeichnungen dargestellt und in der nachfolgenden Beschreibung näher erläutert. Es zeigen:
- Figur 1: einen erfmdungsgemäßen Regensensor in einer Querschnittsdarstellung,
- Figur 2: einen Ausschnitt aus Figur 1 im Detail,
- Figur 3: ein Koppelmedium eines erfindungsgemäßen Regensensors in einer Variation,
- Figur 4: einen weiteren erfindungsgemäßen Regensensor in einer schematischen Querschnittsdarstellung und
- Figur 5: einen weiteren erfindungsgemäßen Regensensor in einer schematischen Querschnittsdarstellung.

### Beschreibung der Ausführungsbeispiele

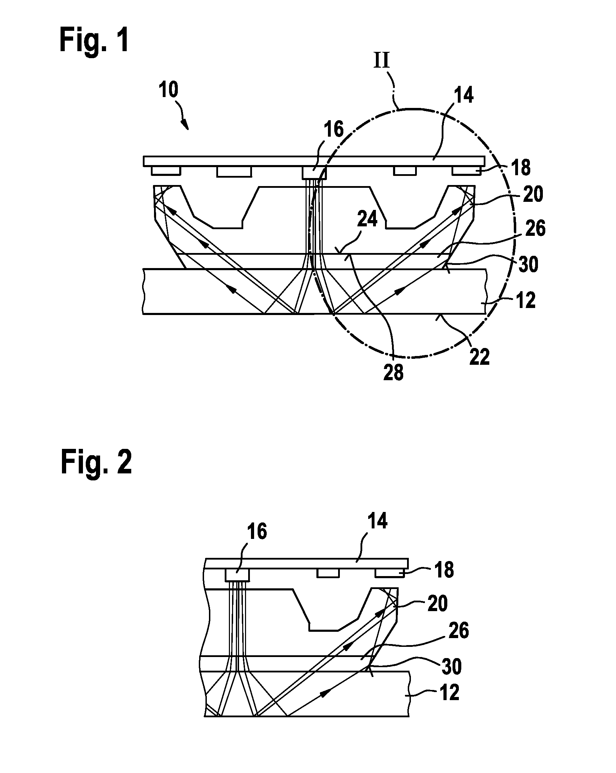

Figur 1 zeigt einen erfindungsgemäßen Regensensor 10 auf einer Scheibe 12. Der Regensensor 10 umfasst im Wesentlichen eine Platine 14 auf dem ein oder mehrere Sender 16 sowie ein oder mehrere Empfänger 18 als Halbleiterbauelemente in SMD-Technik aufgebracht sind. Weiterhin umfasst der Regensensor 10 einen Lichtleitkörper 20, der die Strahlung der Sender 16 in Richtung der Scheibe 12 lenkt. Der Bereich, auf der Oberfläche der Scheibe 12, der dem Regensensor abgewandt ist und auf dem die Strahlung auftrifft, wird als sensitive Fläche 22 bezeichnet. Der Lichtleitkörper 20 weist eine Grundfläche 24 auf, die der Scheibe 12 zugewandt ist. Zwischen Scheibe 12 und Grundfläche 24 des Lichtleitkörpers 20 ist ein Koppelmedium 26 angeordnet. Das Koppelmedium 26 ist von im Wesentlichen flächiger Gestalt und weist eine Deckfläche 28 auf, die an die Grundfläche 24 des Lichtleitkörpers 20 angekoppelt ist. Weiterhin weist das Koppelmedium 20 eine Seitenfläche 30 auf, die gegenüber der Deckefläche 28 angeschrägt ist, so dass die Strahlung, die aus der Scheibe 12 in Richtung der Seitenfläche austritt, an dieser derart reflektiert wird, dass die Strahlung in den Empfänger 18 gelangt. Auf dies Weise bildet diese schräge Seitenfläche eine lichtführende Struktur. Die Sensoreinrichtung ist normalerweise noch von einem Gehäuse umschlossen, welches hier aus Gründen der Übersichtlichkeit nicht gezeichnet ist.

In Figur 2 ist die lichtführende Struktur 30 mit den übrigen Komponenten 12, 14, 16, 18, 20 im Detail dargestellt. Zwischen dem Lichtleitkörper 20 und der Scheibe 12 ist das Koppelmedium 26 angeordnet, welches eine schräge Seitenfläche 30 aufweist, die die von der Scheibe 12 in Richtung der Seitenfläche 30 reflektierte Strahlung in Richtung des Empfängers 18 reflektiert. Hierbei ist die äußere Berandung des Lichtleitkörpers 20 mit der Seitenfläche 30 des Koppelmediums 26 bündig ausgeführt.

Das Koppelmedium 20 besteht aus einem Silikonkissen, wobei die Seitenfläche 30 mit einem reflektierenden Medium, beispielsweise einem geeigneten Lack, bedruckt ist. Typischerweise ist das Koppelmedium 26 elastisch ausgebildet, um Unebenheiten des Lichtleitkörpers 20 an seiner Grundfläche 24 und der Scheibe 12 auszugleichen und zu verhindern, dass sich zwischen Scheibe 12, Koppelmedium 26 und Lichtleitkörper 20 Luftblasen bilden. Diese würden die Einkopplung der Strahlung des Senders 16 in die Scheibe 12 bzw. die Auskopplung der Strahlung aus der Scheibe 12 in den Lichtleitkörper 20 behindern.

Der Lichtleitkörper 20 ist aus Plexiglas (PMMA) hergestellt, der mit Farbpigmenten derart eingefärbt ist, dass im wesentlichen nur die Strahlung des Senders 16 diese durchdringen kann. Der Empfänger 18 ist ebenfalls so abgestimmt, dass der sensitive Bereich des Empfängers mit der Wellenlänge der Strahlung des Senders 16 korrespondiert. Hierzu kann der Empfänger 18 auch über entsprechende Filter verfügen.

Ebenso wie der Lichtleitkörper 20 kann auch das Koppelmedium derart eingefärbt sein, dass auch dieses die entsprechende Filterwirkung aufweist. Vorteilhafterweise werden unterschiedliche Farbpigmente für Koppelmedium 26 und Lichtleitkörper 20 verwendet, so dass der Durchlassbereich der Kombination im Wesentlichen ausschließlich im Bereich der Senderstrahlung der Sender 16 liegt. Die Sender 16 und die Empfänger 18 sind als lichtemittierende Dioden LED bzw. als lichtempfangende Dioden LRD ausgebildet, die als kostengünstige Halbleiterbauelemente erhältlich sind.

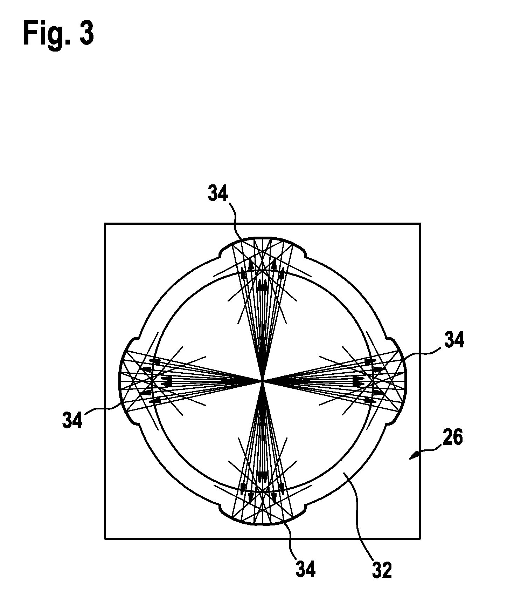

In Figur 3 ist das Koppelmedium 26 eines erfindungsgemäßen Regensensors in einer Draufsicht, also von der Deckfläche 28 aus gesehen, gezeigt. Hierbei ist ein Silikonring 32 in das Koppelmedium 26 eingebracht, der reflektierende Elemente 34 aufweist, die eine lichtführende Struktur bilden. Dieser Silikonring 32 ist in das übrige Koppelmedium 26 in einem 2-komponentigen Spritzgussverfahren eingespritzt, wobei die reflektierenden Elemente 34 als reflektierende Folien eingelegt werden können oder vor dem Einspritzen des Silikonringes 32 entsprechend bedruckt werden können.

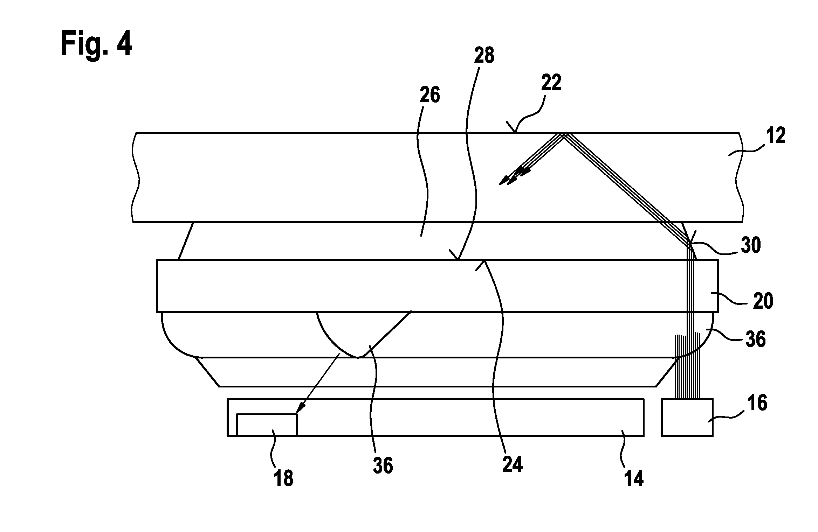

In Figur 4 ist eine Variation eines erfindungsgemäßen Regensensors gezeigt. Das Koppelmedium 26 ist zwischen Scheibe 12 und Lichtleitkörper 20 angeordnet und ist von im Wesentlichen flacher Gestalt mit einer Deckfläche 28, die direkt an die Grundfläche 24 des Lichtleitkörpers 20 angekoppelt ist. Die der Deckfläche 28 gegenüber liegende Fläche liegt auf der Scheibe 12 auf, die typischerweise eine Windschutzscheibe eines Kraftfahrzeugs ist. Die Seitenflächen 30 des Koppelmediums 26 sind bezüglich der Deckfläche 28 um einen Winkel von 20-80 Grad, insbesondere 45 Grad, angeschrägt und mit einer reflektierenden Schicht versehen. Auf diese Weise dient die angeschrägte Seitenfläche 30 als lichtführende Struktur. Der Lichtleitkörper 20 ist hierbei als im Wesentlichen ebene Platte ausgebildet, aus der lichtführende Elemente 36 herausragen, die eine linsenförmige Struktur aufweisen. Die Strahlung tritt aus dem Sender 16 in den Lichtleitkörper 20 ein und trifft dabei auf die linsenförmige Struktur 36. Innerhalb des Lichtleitkörpers 20 wird das Licht in Richtung der Scheibe bzw. in Richtung des Koppelmediums 26 gelenkt. Ein Teil der Strahlung trifft auf die lichtführende Struktur 30, welches als schräge Seitenfläche 30 ausgebildet ist, und wird von dort zur Außenseite der Scheibe 12, in die sensitive Fläche 22 reflektiert.

Bei einer trockenen Scheibe kommt es an dieser Glas-Luft-Grenzfläche zur Totalreflektion, wodurch die Strahlung wieder in das Koppelmedium eintritt. Dort wird die Strahlung, die auf die Seitenwände 30 trifft, wiederum durch die lichtführenden Strukturen 30 umgelenkt und in den Lichtleitkörper 20 eingekoppelt. Sie durchtritt den Lichtleitkörper 20 derart, dass sie an den linsenförmigen Lichtleitelementen 36 austritt und auf den Empfänger 18 gebündelt wird. Dieser vermag auf diese Weise die Feuchtigkeitsbeläge im Bereich der sensitiven Fläche 22 der Außenseite der Scheibe zu erkennen. Die lichtführende Struktur 30, 34 ist hierbei auf der senkrechten Verbindungslinie zwischen der Oberfläche der Scheibe 12 und dem Sender 16 bzw. dem Empfänger 18 angeordnet.

## Patentansprüche

1. Regensensor (10), insbesondere für ein Kraftfahrzeug, mit mindestens einem Sender (16), der Strahlung abzugeben vermag und mindestens einem Empfänger (18), der Strahlung zu empfangen vermag und ein Signal (S) in Abhängigkeit der empfangenen Strahlung abgibt und mindestens einem Lichtleitkörper (20), der mit einer Grundfläche (24) durch ein Koppelmedium (26) mit einer Scheibe (12) verbindbar ist und zumindest die Strahlung des Senders (16) in Richtung der Scheibe (12) leitet, **dadurch gekennzeichnet, dass** das Koppelmedium (26) mindestens eine lichtführende Struktur (30) aufweist.

2. Regensensor (10) nach Anspruch 1, **dadurch gekennzeichnet, dass** das Koppelmedium (26) eine mit der Grundfläche (24) des Lichtleitkörpers (20) verbundene Deckfläche (28) sowie mindestens eine Seitenfläche (30) aufweist und die Seitenfläche (30) schräg zur Grundfläche (24) angeordnet ist, so dass die Seitenfläche (30) eine lichtführende Struktur bildet.

3. Regensensor (10) nach Anspruch 1 oder 2, **dadurch gekennzeichnet, dass** die Seitenfläche (30) des Koppelmediums zumindest im Innern reflektierend ausgebildet ist.

4. Regensensor (10) nach einem der vorhergehenden Ansprüche, **dadurch gekennzeichnet, dass** die Seitenfläche (30) mit Lack versehen, insbesondere bedruckt ist.

5. Regensensor (10) nach einem der vorhergehenden Ansprüche, **dadurch gekennzeichnet, dass** im Koppelmedium (26) ein zumindest teilweise reflektierendes Element (30), insbesondere einen reflektierenden Silikonring oder eine reflektierende Folie als lichtführende Struktur vorgesehen ist.

6. Regensensor (10) nach einem der vorhergehenden Ansprüche, **dadurch gekennzeichnet, dass** die lichtführende Struktur (30) zumindest teilweise auf einer senkrechten Linie zwischen dem Sender (16) und/oder Empfänger (18) und der Scheibe (12) angeordnet ist.

7. Regensensor (10) nach einem der vorhergehenden Ansprüche, **dadurch gekennzeichnet, dass** das Koppelmedium (26) in einem zwei- oder mehrkomponentigen Spritzgussverfahren direkt an den Lichtleitkörper (20) angespritzt ist.
